# EUROPEAN PATENT APPLICATION

(11) **EP 2 808 133 A2**
(43) Date of publication of application: **03.12.2014**
(21) Application number: 14169942.1
(22) Date of filing: 27.05.2014
(51) Int. Cl.: B25J 9/16

(54) **Robot system and method for producing to-be-processed material**

(30) Priority: 31.05.2013 JP 2013116140
(71) Applicant: Kabushiki Kaisha Yaskawa Denki, Kitakyushu-shi, Fukuoka 806-0004 (JP)
(72) Inventor: Izumi, Tetsuro, Kitakyushu-shi, Fukuoka 806-0004 (JP); Nagai, Ryoichi, Kitakyushu-shi, Fukuoka 806-0004 (JP); Hashiguchi, Yukio, Kitakyushu-shi, Fukuoka 806-0004 (JP)
(74) Representative: Viering, Jentschura & Partner Patent- und Rechtsanwälte

(57) **Abstract**

A robot system (1) includes a robot (2), an operation control device (61), an impulse calculation device (63), and a first detection device (62). The robot (2) includes an end effector (23) and a force sensor (24). The force sensor (24) is configured to measure a force applied to the end effector (23). The operation control device (61) is configured to control the robot (2) to perform predetermined work. The impulse calculation device (63) is configured to calculate an impulse applied to the end effector (23) based on a measurement value measured by the force sensor (24) while the robot (2) is performing the predetermined work. The first detection device (62) is configured to generate detection information when the impulse exceeds a threshold.

## Description

### BACKGROUND

### FIELD OF THE INVENTION

The present invention relates to a robot system and a method for producing a to-be-processed material.

### DISCUSSION OF THE BACKGROUND

Japanese Unexamined Patent Application Publication No. 2011-230231 discloses a robot system with a robot that includes an end effector and a force sensor that measures force applied to the end effector. The robot performs predetermined work, and when a value measured by the force sensor reaches a threshold, the robot system detects that a member moved together with the end effector is in contact with another member.

The contents of Japanese Unexamined Patent Application Publication No. 2011-230231 are incorporated herein by reference in their entirety.

When this robot system is used to detect a contact at lower levels of force, the value measured by the force sensor can momentarily exceed the threshold due to contamination of noise or other occurrences even when the member moved together with the end effector is not in contact with another member.

The present disclosure has been made in view of the above-described circumstances, and it is an object of the present disclosure to provide a robot system and a method for producing a to-be-processed material that ensure highly accurate detection of a state of contact that is adversely influential to a member moved together with the end effector if the member has this state of contact with another member.

### SUMMARY

According to one aspect of the present disclosure, a robot system 1 includes a robot 2, an operation control device 61, an impulse calculation device 63, and a first detection device 62. The robot 2 includes an end effector 23 and a force sensor 24. The force sensor 24 is configured to measure a force applied to the end effector 23. The operation control device 61 is configured to control the robot 2 to perform predetermined work. The impulse calculation device 63 is configured to calculate an impulse applied to the end effector 23 based on a measurement value measured by the force sensor 24 while the robot 2 is performing the predetermined work. The first detection device 62 is configured to generate detection information when the impulse exceeds a threshold.

The aspect of the present disclosure ensures highly accurate detection of a state of contact that is adversely influential to a member moved together with the end effector if the member has this state of contact with another member.

### BRIEF DESCRIPTION OF THE DRAWINGS

A more complete appreciation of the present disclosure, and many of the attendant advantages thereof will be readily obtained as the same becomes better understood by reference to the following detailed description when considered in connection with the accompanying drawings, wherein:
FIG. 1 is a diagram illustrating a robot system according to an embodiment;
FIG. 2A illustrates one of a series of work performed by a robot according to the embodiment;
FIG. 2B illustrates another one of the series of work performed by the robot according to the embodiment;
FIG. 2C illustrates another one of the series of work performed by the robot according to the embodiment;
FIG. 3A illustrates another one of other series of work performed by the robot according to the embodiment;
FIG. 3B illustrates another one of other series of work performed by the robot according to the embodiment;
FIG. 3C illustrates another one of other series of work performed by the robot according to the embodiment;
FIG. 4 is a block diagram illustrating a configuration of the robot system according to the embodiment;
FIG. 5A shows graphs of a detection operation performed by a first detector according to the embodiment;
FIG. 5B is a graph of a detection operation performed by a second detector according to the embodiment;
FIG. 6 is a flowchart of processing performed by a robot controller according to the embodiment; and
FIG. 7 is a flowchart of another processing performed by the robot controller according to the embodiment.

### DESCRIPTION OF THE EMBODIMENTS

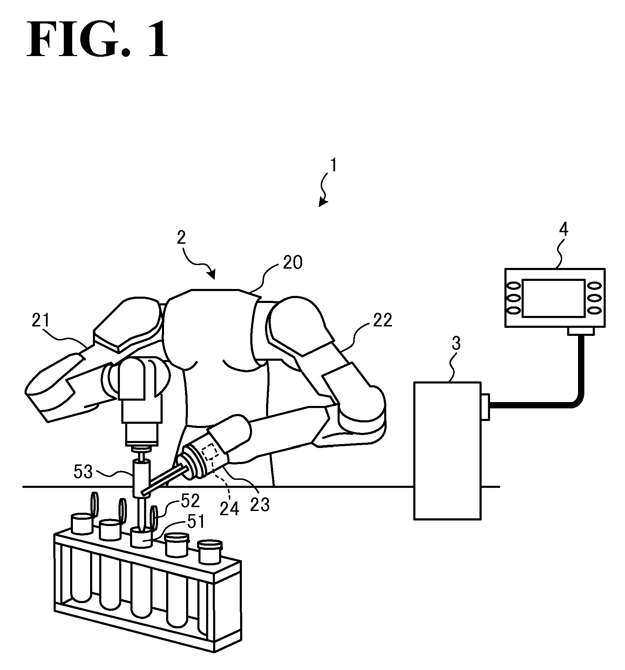

An embodiment of a robot system and a method for producing a to-be-processed material according to an embodiment of the present application will be described in detail below by referring to the accompanying drawings. The following embodiment is provided for exemplary purposes only and is not intended to limit the present disclosure. FIG. 1 is a diagram illustrating a robot system 1 according to this embodiment.

As shown in FIG. 1, the robot system 1 according to this embodiment includes a robot 2, a robot controller 3, and a programming pendant 4. The robot 2 includes a body 20, a right arm 21, a left arm 22, and an end effector 23. The right arm 21 and the left arm 22 extend from the body 20. The end effector 23 is disposed on a distal end of the left arm 22.

Each of the right arm 21 and the left arm 22 is a robot arm including a plurality of structural members and a plurality of joints. Each joint accommodates a servo motor to make each structural member movable. The end effector 23 is a robot hand capable of holding a member to be used in work. The end effector 23 accommodates a force sensor 24.

The force sensor 24 is an inner force sensor to measure a force applied to the end effector 23 from outside. An example of the force sensor 24 is a six-axis inner force sensor, which is capable of measuring a force applied from three-dimensional directions and a force applied in a torsional direction.

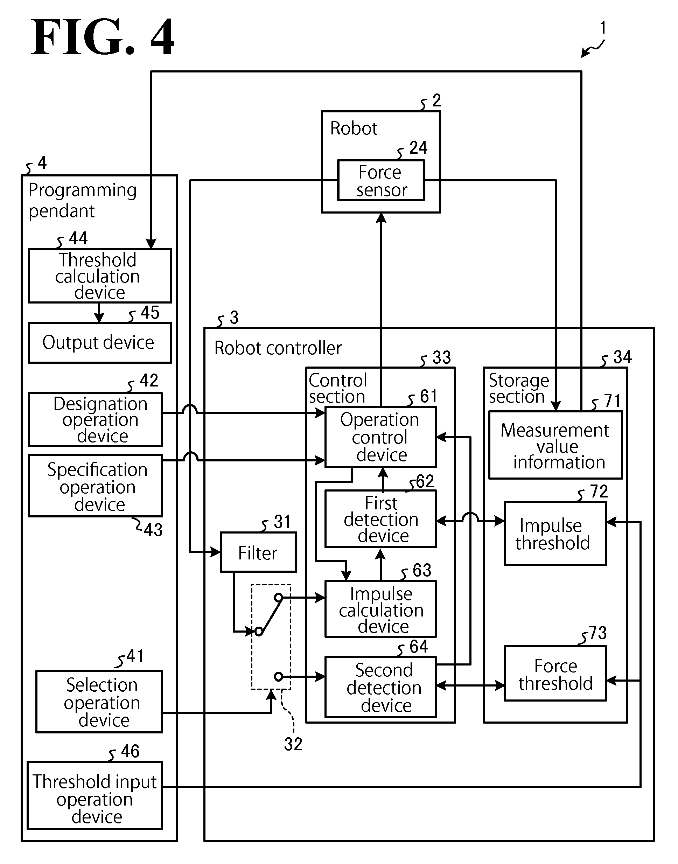

The robot controller 3 is a controller coupled to the robot 2. The robot controller 3 outputs a control signal to the robot 2 so as to control operation of the robot 2. A form of connection between the robot controller 3 and the robot 2 and an exemplary configuration of the robot controller 3 will be described later by referring to FIG. 4.

The programming pendant 4 is a terminal device. A user of the robot system 1 operates the programming pendant 4 so as to teach the robot 2 work content to be performed by the robot 2. The programming pendant 4 is coupled to the robot controller 3 and outputs various parameters and instructions from the user to the robot controller 3. Thus, the programming pendant 4 functions as a teaching device to teach work content to the robot 2. A form of connection between the programming pendant 4 and the robot controller 3 and an exemplary configuration of the programming pendant 4 will be described later referring to FIG. 4.

The following description is regarding a producing operation that the robot 2 performs with respect to a to-be-processed material. Specifically, bottomed cylindrical tubes 51 are each provided with an openable/closable lid 52 over an opening of the upper end of the tube. The tube 51 accommodates a specimen prepared in advance as a to-be-processed material. The robot 2 uses a pipette 53 to pour a chemical solution dropwise onto the specimen in the tube 51.

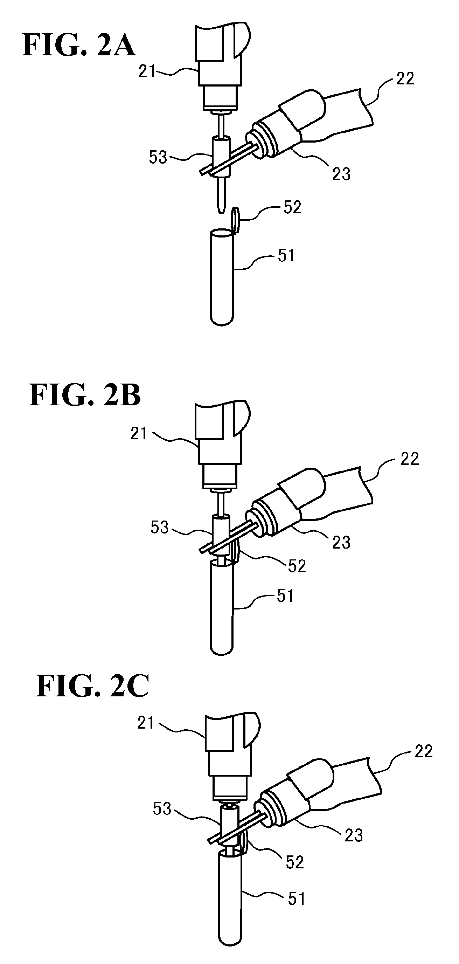

FIGs. 2A to 3C are diagrams illustrating a series of work that the robot 2 according to the embodiment performs. As shown in FIG. 2A, in the producing operation of producing a to-be-processed material, the tube 51 is prepared with a specimen accommodated in the tube 51 in advance and with the lid 52 open.

A chemical solution is introduced into the pipette 53, and the robot 2 holds the pipette 53 on the end effector 23 at the distal end of the left arm 22 in such a manner that the nozzle of the pipette 53 is oriented vertically downward. Then, with the distal end of the right arm 21 supporting an end of the plunger of the pipette 53, the robot 2 brings the right arm 21 and the left arm 22 into operation so as to move the nozzle of the pipette 53 to a position over the upper opening of the tube 51.

Next, as shown in FIG. 2B, the robot 2 brings the right arm 21 and the left arm 22 into operation to insert the nozzle of the pipette 53 into the tube 51. Then, as shown in FIG. 2C, the robot 2 moves the right arm 21 vertically downward to have its distal end press the plunger of the pipette 53 vertically downward. In this manner, the robot 2 pours the chemical solution in the pipette 53 dropwise onto the specimen in the tube 51, thus performing the producing operation of producing the to-be-processed material. Then, the robot 2 performs a similar producing operation with respect to other specimens in the other tubes 51.

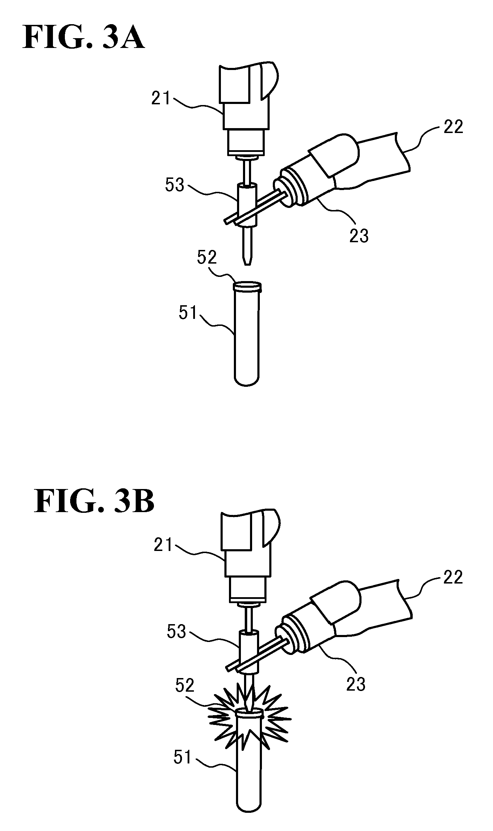

In this producing operation, when the robot 2 moves the nozzle of the pipette 53 to a position over the tube 51, the lid 52 of the tube 51 may occasionally be in closed state for some reason, as shown in FIG. 3A. In this case, if the robot 2 moves the pipette 53 vertically downward in an attempt to insert the nozzle of the pipette 53 into the tube 52, the nozzle contacts the lid 52 of the tube 51, as shown in FIG. 3B.

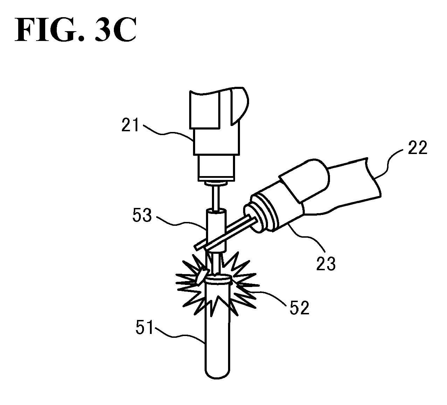

When the pipette 53 is made of a relatively fragile material such as glass, and if the robot 2 attempts to move the nozzle of the pipette 53 further vertically downward, then the pipette 53 may be damaged as shown in FIG. 3C.

In this respect, the robot 2 includes the force sensor 24 so as to measure a force applied to the end effector 23. This enables the robot 2 to detect an excessively forceful contact between the nozzle of the pipette 53 and the lid 52 of the tube 51 when, for example, a value measured by the force sensor 24 reaches a threshold.

However, if the threshold of the force sensor 24 is set at a relative small value so as to avoid damage to a fragile tool such as the pipette 53, the measurement value measured by the force sensor 24 can momentarily exceed the threshold due to the influence of noise or other occurrences even when the nozzle of the pipette 53 is not in contact with the lid 52 of the tube 51. This can induce erroneous detection of an occurrence as a contact. Common practice to avoid erroneous detection is to use a practical value for the threshold to be compared with the measurement value measured by the force sensor 24. This, however, can make it difficult to accurately detect a contact at lower levels of force between the nozzle of the pipette 53 and the lid 52 of the tube 51.

In view of this, the robot system 1 accurately detects that a state of contact between the nozzle of the pipette 53 and the lid 52 of the tube 51 may adversely influence the pipette 53. Examples of such contact state include, but are not limited to, a contact state in which a level of force damaging to the pipette 53 is applied to the pipette 53.

Next, a configuration of the robot system 1 will be described in detail by referring to FIG. 4. FIG. 4 is a block diagram illustrating a configuration of the robot system 1 according to this embodiment. It is noted that FIG. 4 only shows components necessary for the description of the robot system 1, omitting those components of general nature such as the component to teach work content to the robot 2.

As shown in FIG. 4, the robot system 1 includes the robot 2, the robot controller 3, and the programming pendant 4. The robot 2 and the force sensor 24 of the robot 2 are as described above, and will not be elaborated here.

The robot controller 3, the robot 2, and the programming pendant 4 are coupled to each other in an information transmittable manner. The robot controller 3 is a controller that controls the operation of the robot 2. The robot controller 3 includes a filter 31, a selection section 32, a control section 33, and a storage section 34.

The filter 31 is a lowpass filter that removes noise from a signal (hereinafter referred to as "measurement value signal") indicating the measurement value of the force input from the force sensor 24. The filter 31 outputs the measurement value signal less the noise to the selection section 32.

The selection section 32 selects between an impulse calculation device 63 and a second detection device 64 of the control section 33, described later, as an output destination of the measurement value signal input from the filter 31, and outputs the measurement value signal to the selected device. The selection section 32 selects the output destination of the measurement value signal based on a switching signal, described later, input from the programming pendant 4.

The control section 33 controls overall operation of the robot controller 3. The control section 33 includes an operation control device 61, a first detection device 62, the impulse calculation device 63, and the second detection device 64. The storage section 34 is an information storage device that stores measurement value information 71, an impulse threshold 72, and a force threshold 73.

The measurement value information 71 contains measurement values of the force measured by the force sensor 24. The impulse threshold 72 is used by the first detection device 62 to detect the state of contact between the nozzle of the pipette 53 and the lid 52 of the tube 51 while the robot 2 is working.

The force threshold 73 is used by the second detection device 64 to detect the state of contact between the nozzle of the pipette 53 and the lid 52 of the tube 51 while the robot 2 is working. It is possible for the user of the robot system 1 to input a desired impulse threshold 72 and a desired force threshold 73 into the robot controller 3 through the programming pendant 4 to store the thresholds in the storage section 34. A method of calculating the impulse threshold 72 and the force threshold 73 will be described later.

The storage section 34 also stores other information, not elaborated here, such as job information containing content of work to be performed by the robot 2. The job information is a unit of a set of command statements specifying an operation form of the robot 2. The job information also can be stored in the storage section 34. Specifically, the user inputs various parameters necessary for an operation of the robot 2 into the robot controller 3 through the programming pendant 4.

The operation control device 61 reads the job information from the storage section 34 to construe the job information. Then, the operation control device 61 outputs to the robot 2 an operation command corresponding to the job information, thereby controlling the operation of the robot 2. In this embodiment, the operation control device 61 controls the robot 2 to perform the work of producing a to-be-processed material shown in FIGs. 2A to 2C.

Also, when the operation control device 61 receives detection information indicating that the nozzle of the pipette 53 and the lid 52 of the tube 51 are in contact with each other from the first detection device 62 or the second detection device 64, the operation control device 61 stops the work of the robot 2 and performs post-processing for failed work. For example, upon input of the detection information, the operation control device 61 stops the work of the robot 2 and then performs the post-processing for failed work including moving the pipette 53 to the position shown in FIG. 2A. This eliminates or minimizes damage to the pipette 53.

For the period of time when the impulse calculation device 63 is selected by the selection section 32 as the output destination of the measurement value signal, the first detection device 62 detects the state of contact between the nozzle of the pipette 53 and the lid 52 of the tube 51 based on the impulse input from the impulse calculation device 63 and the impulse threshold 72 read from the storage section 34.

Specifically, the impulse calculation device 63 calculates the impulse applied to the end effector 23 based on the measurement value signal input from the force sensor 24 through the filter 31 and the selection section 32. For example, the impulse calculation device 63 sequentially integrates the measurement values measured by the force sensor 24 in every 10 milliseconds (msec) so as to calculate the impulse applied to the end effector 23. Then, the impulse calculation device 63 outputs the calculated impulse to the first detection device 62.

The first detection device 62 compares the impulse input from the impulse calculation device 63 with the impulse threshold 72. When the impulse is in excess of the impulse threshold 72, the first detection device 62 generates detection information and outputs the detection information to the operation control device 61.

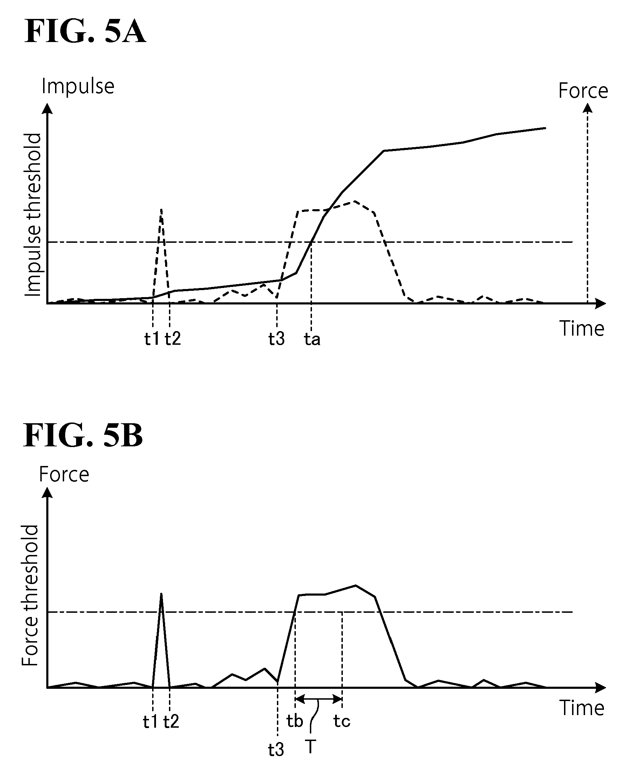

Referring to FIG. 5A, an exemplary detection operation performed by the first detection device 62 will be described. FIG. 5A shows graphs of the detection operation performed by the first detection device 62 according to this embodiment. The dotted polygonal line graph shown in FIG. 5A indicates a measurement value of the force measured by the force sensor 24.

The solid polygonal line graph shown in FIG. 5A indicates the impulse calculated when the measurement value of the force indicated by the dotted polygonal line graph in FIG. 5A is measured. The dashed line shown in FIG. 5A indicates the impulse threshold 72. This example is regarding a case where noise is contaminated in the measurement value signal during the period between time t1 to time t2, and the nozzle of the pipette 53 and the lid 52 of the tube 51 contact with each other at time t3.

As shown in FIG. 5A, the measurement value of the force shows a momentary, drastic increase during the period between time t1 and time t2 due to the influence of noise, even though the nozzle of the pipette 53 and the lid 52 of the tube 51 are not in contact with each other. For the impulse during the period between time t1 and time t2, even though the impulse somewhat increases as compared with the period up to time t1, the increase is not as drastic since the increase in the measurement value of the force is momentary.

Contrarily, after time t3, at which the nozzle of the pipette 53 and the lid 52 of the tube 51 come into contact with each other, the measurement values show continuous, drastic increases. When the measurement values show continuous, drastic increases as in this example, the calculated impulse accordingly shows a drastic increase.

Thus, even if the measurement value of the force increases momentarily drastically due to contamination of noise, the impulse calculated by the impulse calculation device 63 does not increase drastically. Instead, the impulse calculated by the impulse calculation device 63 increases drastically when the nozzle of the pipette 53 and the lid 52 of the tube 51 are in contact with each other.

In view of this, in the robot system 1, the storage section 34 of the robot controller 3 stores in advance an impulse threshold 72, which is suitable for detecting drastic increases in the impulse. The proper impulse threshold 72 is calculated by the programming pendant 4. Then, when the impulse exceeds the impulse threshold 72 at time ta, the first detection device 62 generates detection information indicating that the nozzle of the pipette 53 and the lid 52 of the tube 51 are in contact with each other. Then, the first detection device 62 outputs the detection information to the operation control device 61.

Thus, even when the measurement value of the force increases momentarily drastically due to contamination of noise, the first detection device 62 does not erroneously generate detection information. When the nozzle of the pipette 53 and the lid 52 of the tube 51 are in contact with each other, the first detection device 62 reliably generates detection information.

Thus, the robot system 1 highly accurately detects a state of contact that is adversely influential to the member moved together with the end effector 23 (which is the pipette 53 in this example) if the member has this state of contact with another member (which is the lid 52 of the tube 51 in this example).

When a reset signal is input into the impulse calculation device 63 from the operation control device 61, the impulse calculation device 63 resets the hitherto integrated value of the impulse. The timing at which to output the reset signal from the operation control device 61 to the impulse calculation device 63 can be set through the programming pendant 4.

For example, the operation control device 61 outputs the reset signal to the impulse calculation device 63 at the time when the pipette 53 moved by the robot 2 is at the position over the tube 51 (see FIGs. 2A and 3A). This ensures that the first detection device 62 properly detects the state of contact between the nozzle of the pipette 53 and the lid 52 of the tube 51 when the lid 52 is closed at the time of the robot 2 inserting the nozzle of the pipette 53 into the tube 51.

When the operation control device 61 brings the pipette 53 into operation in a direction in which the pipette 53 approaches the tube 51 in accordance with the information stored in the job information, the operation control device 61 may set the pipette 53 to such an operation mode that the pipette 53 is inoperable at equal to or more than a predetermined torque. In this operation mode, even if the pipette 53 contacts the lid 52 of the tube 51 or another member, the pipette 53 is not forced into the tube 51 with equal to or more than the predetermined torque. This eliminates or minimizes damage to the pipette 53. Here, when the contact at the predetermined torque causes the impulse to increase and exceed the impulse threshold 72, the impulse calculation device 63 generates detection information indicating the contact between the nozzle of the pipette 53 and the lid 52 of the tube 51, and outputs the detection information to the controller 61.

When the detection information is input into the operation control device 61 from the first detection device 62, the operation control device 61 may output a reset signal to the impulse calculation device 63. With this configuration, the impulse calculation device 63 resets the integrated value of the impulse after detecting the state of contact between the nozzle of the pipette 53 and the lid 52 of the tube 51. Then, the impulse calculation device 63 resumes calculation of an impulse and outputs the calculated impulse to the first detection device 62.

This ensures that when the pipette 53 contacts another member during the operation of the robot 2 associated with the post-processing for failed work, the first detection device 62 properly detects the state of the contact. When the detection information is input into the operation control device 61 during the post-processing for failed work, the operation control device 61 stops the operation of the robot 2, thereby eliminating or minimizing damage to the pipette 53 that can occur due to contact with a member other than the lid 52 of the tube 51.

Referring back to FIG. 4, the second detection device 64 detects the state of contact between the nozzle of the pipette 53 and the lid 52 of the tube 51 during the period of time when the second detection device 64 is selected by the selection section 32 as the output destination of the measurement value signal.

The second detection device 64 detects the state of contact between the nozzle of the pipette 53 and the lid 52 of the tube 51 based on the measurement value signal input from the force sensor 24 through the filter 31 and the selection section 32 and based on a suitable force threshold 73 read from the storage section 34. The suitable force threshold 73 is calculated by the programming pendant 4.

Here, referring to FIG. 5B, an exemplary detection operation performed by the second detection device 64 will be described. FIG. 5B is a graph of the detection operation performed by the second detection device 64 according to this embodiment. The solid polygonal line graph shown in FIG. 5B indicates the measurement value of the force measured by the force sensor 24. The dashed line shown in FIG. 5B indicates the force threshold 73.

The solid polygonal line graph shown in FIG. 5B has an identical shape to the shape of the dotted polygonal line graph shown in FIG. 5A. That is, FIG. 5B is also regarding a case where noise is contaminated in the measurement value signal during the period between time t1 and time t2, and the nozzle of the pipette 53 and the lid 52 of the tube 51 contact each other at time t3.

As shown in FIG. 5B, when the force sensor 24 measures a force in excess of the force threshold 73 continuously for a predetermined period of time T (which is between time tb and time tc in this example), the second detection device 64 generates detection information indicating that the nozzle of the pipette 53 and the lid 52 of the tube 51 are in contact with each other at time tc. Then, the second detection device 64 outputs the detection information to the operation control device 61.

This ensures that the second detection device 64 does not erroneously generate detection information when the measurement value of the force momentarily exceeds the force threshold 73 during the period between time t1 and time t2 due to contamination of noise. Additionally, when the nozzle of the pipette 53 and the lid 52 of the tube 51 contact with each other, the second detection device 64 reliably generates detection information at time tc.

Thus, the robot system 1 highly accurately detects a state of contact that is adversely influential to the member moved together with the end effector 23 (which is the pipette 53 in this example) if the member has this state of contact with another member (which is the lid 52 of the tube 51 in this example).

Referring back to FIG. 4, the programming pendant 4 will be described. The programming pendant 4 includes a selection operation device 41, a designation operation device 42, a specifying operation device 43, a threshold calculation device 44, an output device 45, and a threshold input operation device 46.

The selection operation device 41 accepts a selection operation of causing the user (for example, a teacher teaching work content to the robot 2) to select between the first detection device 62 and the second detection device 64 as a device that outputs the detection information.

The selection operation device 41 outputs a selection signal to the selection section 32 in accordance with the operation performed by the user. The selection signal is for causing the selection section 32 to select between the impulse calculation device 63 and the second detection device 64 as an output destination of the measurement value signal. When the impulse calculation device 63 is selected as the output destination of the measurement value signal, the first detection device 62 generates the detection information. When the second detection device 64 is selected as the output destination of the measurement value signal, the second detection device 64 generates the detection information.

That is, by operating the selection operation device 41, the user freely selects which of the first detection device 62 and the second detection device 64 to detect the state of contact between the nozzle of the pipette 53 and the lid 52 of the tube 51.

Here, as seen from a comparison between FIGs. 5A and 5B, when the nozzle of the pipette 53 and the lid 52 of the tube 51 contact with each other, the first detection device 62 is capable of generating the detection information at a point of time earlier than the point of time at which the second detection device 64 generates the detection information. Hence, it is preferable to select the first detection device 62 when the end effector 23 moves a member more susceptible to external force.

The second detection device 64 does not require calculation processing of the impulse in the detection of contact between the nozzle of the pipette 53 and the lid 52 of the tube 51. Hence, it is possible to select the second detection device 64 when the end effector 23 moves a member more resistive to external force. This ensures improved responsibility and saves the robot controller 3 the load of processing.

The designation operation device 42 accepts a designation operation of causing the user (who is, for example, the teacher teaching work content to the robot 2) to designate a work stage, among work stages in the predetermined work performed by the robot 2, at which the force sensor 24 starts measuring the force.

The designation operation device 42 outputs, for example, a designation signal in accordance with the designation operation of the user to the operation control device 61, which is in the control section 33 of the robot controller 3. The operation control device 61 controls the force sensor 24 to start measuring force at the work stage corresponding to the designation signal.

For example, at the point of time when the work stage of the robot 2 proceeds to the work stage shown in FIG. 2A, the operation control device 61 outputs to the force sensor 24 a control signal to start measuring force. Also the operation control device 61 outputs the above-described reset signal to the impulse calculation device 63 at the work stage corresponding to the designation signal.

The specifying operation device 43 accepts a specifying operation of causing the user (for example, the teacher teaching the work content to the robot 2) to specify the direction of the force to be measured by the force sensor 24. As described above, the force sensor 24 is a six-axis sensor, which is capable of measuring a force applied from three-dimensional directions and a force applied in a torsional direction.

Thus, by operating the specifying operation device 43, the user can specify any desired direction as the direction of the force to be measured by the force sensor 24 in accordance with the work to be performed by the robot 2.

The specifying operation device 43 outputs a specification signal in accordance with the user's operation to the operation control device 61, which is in the control section 33 of the robot controller 3. The operation control device 61 outputs a control signal that controls the force sensor 24 to selectively measure the force applied to the direction corresponding to the specification signal, from among the three-dimensional directions and the force applied in the torsional direction.

Based on the measurement value information 71 read from the storage section 34 of the robot controller 3, the threshold calculation device 44 calculates a proper impulse threshold 72 and a proper force threshold 73. Before the threshold calculation device 44 calculates the impulse threshold 72 and the force threshold 73, the robot 2 repeats test work a plurality of times.

For example, when the robot 2 performs the producing operation of the to-be-processed material shown in FIGs. 2A to 2C, the robot 2 performs test work 30 times, for example. In the test work, the tube 51 with the lid 52 in open state is prepared, and the nozzle of the pipette 53 is inserted into the tube 51.

In the robot controller 3, measurement values measured by the force sensor 24 during the 30 times of test work are stored in the storage section 34 as the measurement value information 71. Here, the storage section 34 stores a total of 30 pieces of measurement value information 71 for each test work.

The measurement value information 71 stored in the storage section 34 indicates measurement values measured when the nozzle of the pipette 53 and the lid 52 of the tube 51 are not in contact with each other, that is, measured during a period of time when no detection information is generated.

The threshold calculation device 44 calculates an impulse for each piece of measurement value information 71 obtained from the 30 times of test work read from the storage section 34 of the robot controller 3. Then, the threshold calculation device 44 calculates a maximum impulse among the 30 impulses as a proper impulse threshold 72, and outputs the proper impulse threshold 72 to the output device 45.

The threshold calculation device 44 also calculates a movement average of the measurement values of force in the time direction for each piece of the measurement value information 71 of the 30 times of test work. The measurement value information 71 is read from the storage section 34 of the robot controller 3. Then, the threshold calculation device 44 selects a maximum value of values contained in the 30 calculated movement averages as a proper force threshold 73, and outputs the proper force threshold 73 to the output device 45.

Thus, the threshold calculation device 44 calculates the movement average of the measurement values. This ensures that even if the measurement value information 71 contains an influence of noise, the momentary increase in the measurement value caused by noise is smoothened. This enables the threshold calculation device 44 to calculate a proper force threshold 73 with minimized influence of noise contamination.

The output device 45 displays the impulse threshold 72 and the force threshold 73 input from the threshold calculation device 44. The threshold input operation device 46 accepts an input operation of the impulse threshold 72 and the force threshold 73. The threshold input operation device 46 outputs the impulse threshold 72 and the force threshold 73 in accordance with the input operation of the user (who is, for example, the teacher teaching work content to the robot 2) to the storage section 34 of the robot controller 3.

With the programming pendant 4, the user inputs the proper impulse threshold 72 and the proper force threshold 73 displayed on the output device 45 by performing input operation on the threshold input operation device 46. In this manner, the user uses the programming pendant 4 to store the proper impulse threshold 72 and the proper force threshold 73 in the storage section 34 of the robot controller 3.

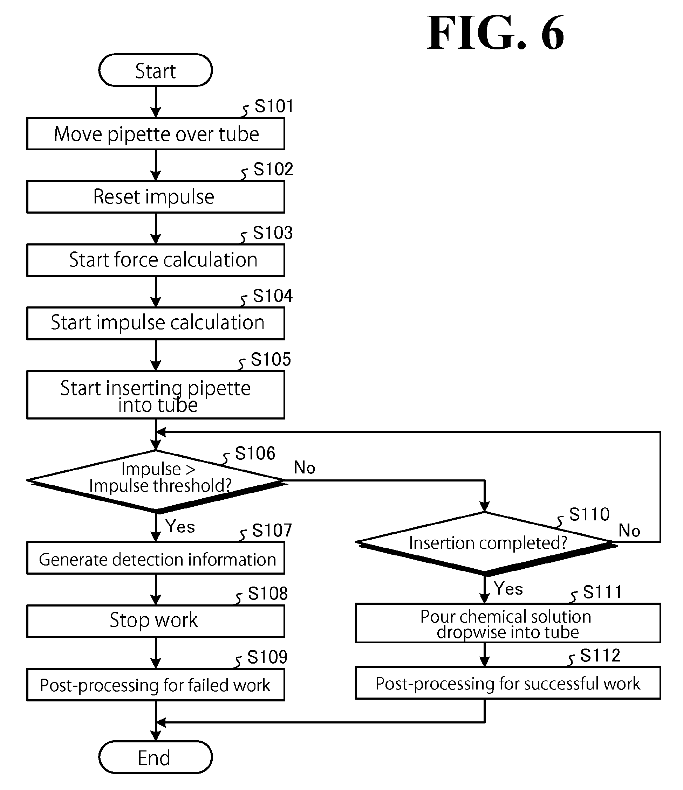

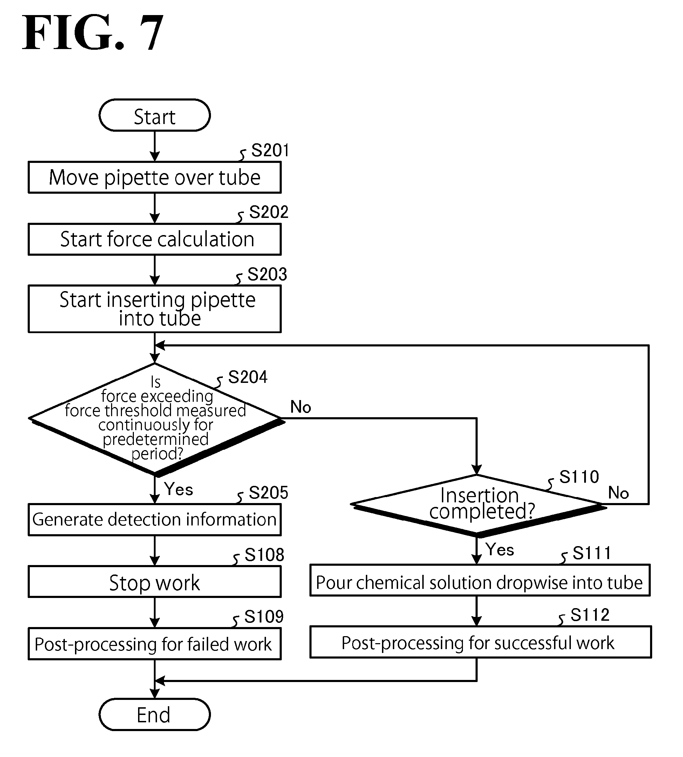

Next, by processing performed by the robot controller 3 will be described by referring to FIGs. 6 and 7. Each of FIGs. 6 and 7 is a flowchart of processing performed by the robot controller 3 according to this embodiment. FIG. 6 illustrates processing in which the robot controller 3 controls the first detection device 62 to generate the detection information. FIG. 7 illustrates processing in which the robot controller 3 controls the second detection device 64 to generate the detection information.

When the robot controller 3 controls the first detection device 62 to generate the detection information, the control section 33 of the robot controller 3 repeats the processing shown in FIG. 6. Specifically, as shown in FIG. 6, the operation control device 61 brings the robot 2 into operation to move the pipette 53 to a position over the tube 51 (step S101). Then, the operation control device 61 outputs a reset signal to the impulse calculation device 63 to reset the impulse (step S102).

Next, the operation control device 61 controls the force sensor 24 to start force calculation (step S103) and controls the impulse calculation device 63 to start impulse calculation (step S104). Then, the operation control device 61 brings the robot 2 into operation to start inserting the pipette 53 into the tube 51 (step S105).

Then, the first detection device 62 determines whether the impulse calculated by the impulse calculation device 63 is in excess of the impulse threshold 72 (step S106). Here, if the first detection device 62 determines that the impulse is in excess of the impulse threshold 72 (Yes at step S106), the first detection device 62 generates the detection information (step S107) and outputs the detection information to the operation control device 61.

Upon input of the detection information, the operation control device 61 stops the work of the robot 2 (step S108) and performs the post-processing for failed work (step S109) to end the processing.

When the first detection device 62 determines that the impulse is equal to or less than the impulse threshold 72 (No at step S106), the operation control device 61 determines whether the insertion of the pipette 53 into the tube 51 is completed (step S 110).

When the operation control device 61 determines that the insertion of the pipette 53 is not completed (No at step S110), the processing returns to step S106. When the operation control device 61 determines that the insertion of the pipette 53 is completed (Yes at step S110), the operation control device 61 brings the robot 2 into operation to pour the chemical solution dropwise from the pipette 53 into the tube 51 (step S111). Then, the operation control device 61 performs post-processing for successful work (step S112) to end the processing. An example of the post-processing for successful work is to return the posture of the robot 2 to its predetermined normal posture.

When the second detection device 64 generates the detection information, the control section 33 of the robot controller 3 repeatedly performs processing shown in FIG. 7. Specifically, as shown in FIG. 7, the operation control device 61 controls the robot 2 to move the pipette 53 to the position over the tube 51 (step S201).

Then, the operation control device 61 controls the force sensor 24 to start force measurement (step S202) and brings the robot 2 into operation to start inserting the pipette 53 into the tube 51 (step S203).

Then, the second detection device 64 determines whether the force sensor 24 measures a force in excess of the force threshold 73 continuously for a predetermined period of time T (step S204). When the second detection device 64 determines that the force sensor 24 measures a force in excess of the force threshold 73 continuously for a predetermined period of time T (Yes at step S204), the second detection device 64 generates the detection information (step S205) and outputs the detection information to the operation control device 61.

Then, similarly to the processing shown in FIG. 6, when the detection information is input into the operation control device 61, the operation control device 61 stops the work of the robot 2 (step S108) and performs the post-processing for failed work (step S109) to end the processing.

When the force sensor 24 measures no force in excess of the force threshold 73 continuously for a predetermined period of time T (No at step S204), the operation control device 61 determines whether the insertion of the pipette 53 is completed (step S110), similarly to the processing shown in FIG. 6.

When the operation control device 61 determines that the insertion of the pipette 53 is not completed (No at step S110), the processing returns to step S204. When the operation control device 61 determines that the insertion of the pipette 53 is completed (Yes at step S110), the operation control device 61 brings the robot 2 into operation to pour chemical solution dropwise into the tube 51 from the pipette 53 (step S111). Then, the operation control device 61 performs the post-processing for successful work (step S112) to end the processing.

As has been described hereinbefore, the robot system according to this embodiment includes the robot, the operation control device, the impulse calculation device, and the first detection device. The robot includes the force sensor to measure a force applied to the end effector.

The operation control device controls the robot to perform predetermined work. The impulse calculation device calculates an impulse applied to the end effector based on the value measured by the force sensor during the predetermined work of the robot. The first detection device generates the detection information when the impulse exceeds a threshold.

The robot system highly accurately detects a state of contact that is adversely influential to the member moved together with the end effector if the member has this state of contact with the another member.

In the above-described embodiment, the robot has been described as a two-arm robot with two robot arms. The number of the robot arms of the robot will not be limited to two.

In the above-described embodiment, the threshold calculated by the threshold calculation device is output by the output device, and stored in the robot controller by the user's input operation. It is also possible to automatically output the threshold to the robot controller from the threshold calculation device to store the threshold in the robot controller.

When this configuration is employed, the threshold calculation device preferably calculates the threshold periodically based on measurement values of force obtained during the actual work as well as during the test work. Every time the threshold calculation device calculates the threshold, the threshold calculation device preferably updates the threshold by outputting the calculated threshold to the robot controller.

With this configuration, even when the proper threshold changes due to a change in the work environment of the robot, the threshold is updated automatically to a proper threshold. This maintains superior accuracy of detection of contact between the nozzle of the pipette and the lid of the tube.

It is possible to provide a personal computer in the robot system to replace the programming pendant according to this embodiment. The personal computer may have application software installed in the personal computer capable of serving the function of the programming pendant according to this embodiment.

In the above-described embodiment, the robot has been described as performing the work of pouring chemical solution dropwise into a tube containing specimen using a pipette. This, however, should not be construed as limiting the work to be performed by the robot.

Thus, even when the robot uses any member to perform any work, the robot system according to this embodiment highly accurately detects a state of contact that is adversely influential to the member moved together with the end effector if the member has this state of contact with the another member.

Obviously, numerous modifications and variations of the present disclosure are possible in light of the above teachings. It is therefore to be understood that within the scope of the appended claims, the present disclosure may be practiced otherwise than as specifically described herein.
- 1: Robot system
- 2: Robot
- 20: Body
- 21: Right arm
- 22: Left arm
- 23: End effector
- 24: Force sensor
- 3: Robot controller
- 31: Filter
- 32: Selection section
- 33: Control section
- 34: Storage section
- 4: Programming pendant
- 41: Selection operation device
- 42: Designation operation device
- 43: Specification operation device
- 44: Threshold calculation device
- 45: Output device
- 46: Threshold input operation device
- 51: Tube
- 52: Lid
- 53: Pipette
- 61: Operation control device
- 62: First detection device
- 63: Impulse calculation device
- 64: Second detection device
- 71: Measurement value information
- 72: Impulse threshold
- 73: Force threshold

## Claims

1. A robot system (1), **characterized by**:
a robot (2) comprising:
an end effector (23); and
a force sensor (24) configured to measure a force applied to the end effector (23);
an operation control device (61) configured to control the robot (2) to perform predetermined work;
an impulse calculation device (63) configured to calculate an impulse applied to the end effector (23) based on a measurement value measured by the force sensor (24) while the robot (2) is performing the predetermined work; and
a first detection device (62) configured to generate detection information when the impulse exceeds a threshold.

2. The robot system (1) according to claim (1), further comprising:
a second detection device (64) configured to generate detection information when the force measured by the force sensor (24) causes the threshold to be exceeded continuously for a predetermined period of time while the robot (2) is performing the predetermined work; and
a selection operation device (41) configured to accept a selection operation of causing a teacher to select between the first detection device (62) and the second detection device (64) to generate the detection information.

3. The robot system (1) according to claim 1 or 2, further comprising a designation operation device (42) configured to accept a designation operation of causing the teacher to designate a work stage, among work stages in the predetermined work, at which the force sensor (24) starts measuring the force.

4. The robot system (1) according to claim 3, wherein the impulse calculation device (63) is configured to reset the calculated impulse when the robot (2) is at the work stage designated in the designation operation.

5. The robot system (1) according to any one of claims 1 to 4, further comprising:
a storage section (34) configured to store measurement values measured by the force sensor (24) during the predetermined work; and
a threshold calculation device (63) configured to calculate an optimum value of the threshold based on a measurement value, among the measurement values stored in the storage section (34), that is measured during a period of time during which the detection information is not generated.

6. The robot system (1) according to any one of claims 1 to 5, wherein the impulse calculation device (63) is configured to reset the calculated impulse when the first detection device (62) generates the detection information.

7. The robot system (1) according to any one of claims 1 to 6, further comprising a specifying operation device (43) configured to accept a specifying operation performed by the teacher to specify a direction of the force measured by the force sensor (24).

8. The robot system( )1 according to any one of claims 1 to 7, wherein the operation control device (61) is configured to stop the predetermined work performed by the robot (2) when the detection information is generated.

9. A method for producing a to-be-processed material, **characterized by**:
performing a producing operation using a robot (2), the robot (2) comprising:
an end effector (23) configured to hold a member to be used in the producing operation to produce the to-be-processed material; and
a force sensor (24) configured to measure a force applied to the end effector (23);
calculating an impulse applied to the end effector (23) based on a measurement value measured by the force sensor (24) while the robot (2) is performing the producing operation; and
generating detection information when the impulse exceeds a threshold.
